# EUROPÄISCHE PATENTSCHRIFT

(11) **EP 1 174 654 B1**
(45) Veröffentlichungstag und Bekanntmachung des Hinweises auf die Patenterteilung: **23.11.2005**
(21) Anmeldenummer: 01116135.3
(22) Anmeldetag: 03.07.2001
(51) Int. Cl.: F16L 55/033, F16B 2/12

(54) **Halterung zur Aufnahme von Rohrleitungen, insbesondere für Hydrauliksysteme**
Support for holding pipes, especially for hydraulic systems
Support pour conduites, en particulier pour systèmes hydrauliques

(30) Priorität: 18.07.2000 DE 10035020
(43) Veröffentlichungstag der Anmeldung: 23.01.2002
(73) Patentinhaber: Bayerische Motoren Werke Aktiengesellschaft, 80809 München (DE); WOCO AVS GmbH, 63628 Bad Soden-Salmünster (DE)
(72) Erfinder: Sentpali, Stefan, 85276 Pfaffenhofen (DE); Gromes, Martin, 63628 Bad Soden-Salmünster (DE); Bauer, Albert, 80933 München (DE); Raasch, Georg, 36381 Schlüchtern (DE)

(56) Entgegenhaltungen:
- EP-A- 0 626 533
- DE-U- 8 816 188
- DE-U- 9 005 368
- DE-U- 9 011 879

## Beschreibung

Die Erfindung betrifft eine Halterung zur Aufnahme von Rohrleitungen, insbesondere für Hydrauliksysteme, mit den im Oberbegriff des Patentanspruches 1 angegebenen Merkmalen.

Eine derartige Halterung mit einem elastisch an einem Halteteil abgestützten zweiteiligen Clip, der zwischen einem Oberteil und einem Unterteil ein langgestrecktes, im wesentlichen zylindrisches Bauteil wie ein Rohr oder dergleichen aufnimmt, ist in der EP-A-0 626 533 beschrieben. Das Unterteil des Clip ist mit einer Öffnung versehen, die den Schaft des mit einem Wandbereich verbindbaren Halteteiles mit einem radialen Spiel umgibt. Das mit dem Unterteil verrastbare Oberteil des Clip weist keine den Schaft mit einem radialen Spiel umgebende Öffnung auf. Bei übermäßigen Verstellbewegungen der von dem Clip gehaltenen Rohrleitung kann sich das Oberteil nicht an dem Schaft radial abstützen. Übermäßige Verstellbewegungen der Rohrleitung insbesondere in Querrichtung zur Mittelachse des Schaftes und der Rohrleitung bewirken an dem Unterteil des Clip Biegemomente und an dem durch einen Gummiring gebildeten elastischen Element Scherkräfte, durch die das Unterteil plastisch verformt und/oder der Gummiring abgeschert werden können. Die Rohrleitung verläuft über der Öffnung im Unterteil, so dass es nicht möglich ist, zuerst die Rohrleitung in dem Clip zu befestigen und danach den Clip bzw. das Halteteil an dem Wandbereich anzubringen. Die Befestigung des Clip an einem Wandbereich erfordert die Befestigung eines Gewindebolzens an dem Wandbereich, der durch Verspannen einer aufgeschraubten Gewindemutter gegen Verdrehung zu sichern ist. Außerdem ist auf einen mit einem Gewinde versehenen, von dem Wandbereich vorstehenden Bereich des Gewindebolzens das mit einem passenden Innengewinde gefertigte Halteteil aufzuschrauben, das zu seiner Verdrehsicherung gegen die Gewindemutter zu verspannen ist. Eine verdrehsichere Lage des Halteteiles hängt somit von der verdrehsicheren Lage des Gewindebolzens ab und dürfte erst nach einem mühevollen mehrmaligen Einstellen des Gewindebolzens und des Halteteiles erreicht werden. Wird das Halteteil nicht an dem Gewindebolzen verdrehgesichert, so kann das Halteteil beispielsweise bei elastischen Verformungen der Rohrleitung zumindest kleine Drehbewegungen um die Achse des Gewindebolzens ausführen, durch die der Gewindebolzen gelockert werden kann und eventuell nach einiger Zeit von dem Wandbereich abfällt. Bei größeren axialen Bewegungen der Rohrleitung kann diese an dem durch eine Gewindebuchse gebildeten Schaft axial anschlagen und dabei beschädigt werden.

Der Erfindung liegt die Aufgabe zu Grunde, eine Halterung zur Aufnahme von Rohrleitungen, insbesondere für Hydrauliksysteme, mit den Merkmalen im Oberbegriff des Patentanspruches 1 anzugeben, die neben einer wirksamen akustischen Dämpfung besser vor einer Überbelastung der Rohrleitung schützt und einen einfacheren Aufbau aufweist.

Diese Aufgabe ist durch die Merkmale im Patentanspruch 1 gelöst. Vorteilhafte Ausgestaltungen der Erfindung sind den Unteransprüchen entnehmbar.

Das Unterteil und das Oberteil des Clip weisen jeweils eine Öffnung auf, die den Schaft des Halteteiles mit einem radialen Spiel umgibt. Dadurch können sich bei übermäßigen Verstellbewegungen der Rohrleitung, die beispielsweise durch Druckstöße des in der Rohrleitung befindlichen Mediums verursacht sein können, das Unterteil und das Oberteil gleichzeitig oder nach einer eventuell elastischen Verstellbewegung des Unterteiles und/oder des Oberteiles nacheinander jeweils nach Überwindung des betreffenden radialen Spiels an dem Schaft des Halteteiles radial abstützen, wodurch der Verstellweg der Rohrleitung zuverlässig begrenzt ist und Beschädigungen eines Teiles der Halterung vermieden sind. Eine radiale Abstützung des Oberteiles an dem Schaft vermindert die am Unterteil wirkende Belastung erheblich. Innerhalb des radialen Spiels kann sich die Rohrleitung und damit der Clip über das elastische Element akustisch gedämpft elastisch in allen Raumrichtungen an dem Wandbereich abstützen.

Das Halteteil kann auch dann an dem Wandbereich befestigt oder von dem Wandbereich gelöst werden, wenn die Rohrleitung in einen Aufnahmeraum zwischen dem Unterteil und dem Oberteil des Clip eingebracht ist und der geschlossene Clip die Rohrleitung festhält. Das Halteteil und damit die von dem Clip abgestützte Rohrleitung ist in einfacher Weise gegenüber Belastungen in allen Richtungen festgehalten, wenn das Halteteil über ein Befestigungsmittel, beispielsweise eine durch eine axiale Durchtrittsöffnung im Schaft in den Wandbereich eingeschraubte Schraube axial zum Wandbereich belastet ist und die Schraube gleichzeitig zur Mittelachse des Schaftes radiale Verstellbewegungen des Halteteiles verhindert. Über einen einzigen, wenigstens ein Unterteil und ein Oberteil aufweisenden Clip können mehrere Rohrleitungen, beispielsweise zwei Rohrleitungen symmetrisch oder unsymmetrisch zum Schaft gleichzeitig abgestützt werden.

Nach einer vorteilhaften Ausgestaltung bestehen die elastischen Elemente aus Federn, Gummielementen oder Elastomerelementen. Solche Elemente sind allgemein bekannt und deshalb ohne großen Aufwand und zu geringen Kosten in jeder beliebigen Ausgestaltung und Charakteristik herzustellen bzw. zu beziehen.

Wenn nach einer erfinderischen Weiterbildung das Halteteil in der Seitenansicht T-förmig mit einem horizontalen Querträger und einem vertikalen Schaft ausgebildet ist und wenn an beiden Enden des Querträgers je eines der elastischen Elemente angeordnet ist, ergibt sich ein konstruktiv einfaches Halteteil, das z. B. im Spritzgußverfahren leicht und ohne großen Aufwand hergestellt werden kann. Außerdem begünstigt diese Form durch ihren symmetrischen Aufbau das Tragverhalten der gesamten Halterung.

Damit das Unterteil und das Oberteil des Clips nicht beim Transport bzw. während der Montage verloren gehen und damit das Oberteil und das Unterteil in einen vorbestimmten Abstand zueinander gehalten werden, so dass die Rohrleitungen ohne weitere Handgriffe in den Clip eingelegt werden können, ist vorzugsweise vorgesehen, dass das Oberteil und das Unterteil über mindestens eine Sollbruchstelle miteinander verbunden sind.

Wenn nach einer vorteilhaften Ausgestaltung das Oberteil und das Unterteil miteinander korrespondierende Rastelemente zur formschlüssigen Verbindung untereinander aufweisen, ist eine sichere Befestigung der beiden Teile in fertig montiertem Zustand und damit eine sichere und feste Aufnahme der Rohrleitungen gewährleistet. Darüber hinaus ergibt sich eine Abfallsicherung für die Rohrleitungen, so dass selbst bei einer Beschädigung der elastischen Elemente eine formschlüssige Lagerung des entkoppelten Elements zum körperfesten Element gegeben ist.

Besonders vorteilhaft gestaltet sich der Clip, wenn nach einer bevorzugten Ausgestaltung das Oberteil im Anlieferzustand vom Unterteil beabstandet ist und im fertig montierten Zustand an diesem anliegt. Dadurch kann die Rohrleitung bei der Montage ohne weitere Manipulationen und Arbeitsgänge in den Clip zwischen Ober- und Unterteil eingelegt werden. In fertig montiertem Zustand liegen Ober- und Unterteil dann aneinander an und gewährleisten so eine sichere Lagerung der Rohrleitung.

Wenn nach einer vorteilhaften Weiterbildung das Unterteil aus einem im wesentlichen flächigen, den vertikalen Schaft umgebenden Mittelteil und aus zwei an gegenüberliegenden Seitenrändem des Mittelteils vorgesehenen teilkreisförmigen Aufnahmen für die Rohrleitungen besteht und wenn weiterhin die teilkreisförmigen Aufnahmen auf den elastischen Elementen gelagert sind, ergibt sich für die Rohrleitungen eine sichere Aufnahme in der Halterung, ohne dass es zu ungewollten Verspannungen kommen kann. Außerdem ist gewährleistet, dass durch die Lagerung der teilkreisförmigen Aufnahmen auf den elastischen Elementen die Kräfte genau dort aufgenommen werden können, wo sie entstehen bzw. einwirken und somit eine gute akustische Entkopplung erreicht wird.

Wenn in Weiterbildung der vorstehenden Ausgestaltung das Oberteil ebenfalls aus einem im wesentlichen flächigen, den vertikalen Schaft umgebenden Mittelteil und aus zwei teilkreisförmigen Aufnahmen besteht und wenn sich weiterhin die teilkreisförmigen Aufnahmen des Oberteils und die teilkreisförmigen Aufnahmen des Unterteils kreisförmig ergänzen, ist die Rohrleitung lagesicher gehaltert. Diese Ausgestaltung macht es darüber hinaus auch möglich, dass die erfindungsgemäße Halterung in beliebigen Einbaulagen (hängend, stehend oder seitlich) verbaut werden kann, da die Rohrleitungen aufgrund der formschlüssigen Klemmung in dem Clip nicht aus den kreisförmigen Aufnahmen herausfallen können.

Die erfindungsgemäße Halterung kann mit beliebigen Befestigungsmitteln am Untergrund befestigt werden, so dass eine große Flexibilität hinsichtlich ihres Verwendungszwecks gegeben ist.

Weitere Vorteile und Merkmale der vorliegenden Erfindung werden aus der nachfolgenden detaillierten Beschreibung eines Ausführungsbeispieles einer erfindungsgemäßen Halterung im Zusammenhang mit den beigefügten Zeichnungen ersichtlich. Es zeigen:
- Fig. 1: eine erfindungsgemäße Halterung im Anliefer- bzw. Montagezustand,
- Fig. 2: die erfindungsgemäße Halterung nach Fig. 1 im fertig montierten Zustand,
- Fig. 3: einen Schnitt entlang der Linie A-A in Fig. 1, und
- Fig. 4: die erfindungsgemäße Halterung in einer perspektivischen Ansicht.

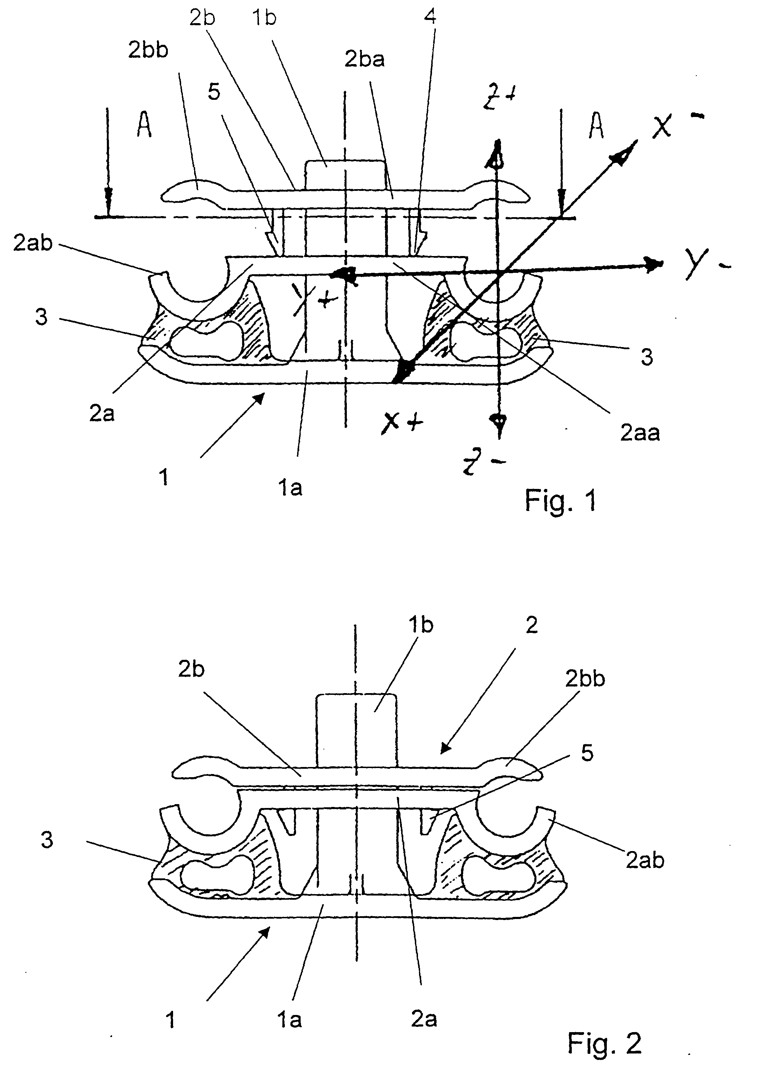

In Fig. 1 ist eine erfindungsgemäße Halterung in einem Zustand dargestellt, in dem die Halterung angeliefert wird und in dem sie zur Aufnahme von Rohrleitungen bereit ist.

Die erfindungsgemäße Halterung umfaßt ein Halteteil 1, der zur Aufnahme von nicht dargestellten Rohrleitungen, insbes. für Hydrauliksysteme, verwendet werden kann. Das Halteteil 1 kann über nicht dargestellte beliebige Befestigungselemente an einem ebenfalls nicht dargestellten Untergrund befestigt werden.

Das Halteteil ist in der Seitenansicht T-förmig ausgebildet und besteht aus einem - bezogen auf die Darstellung in Fig. 1 - horizontalen Querträger 1 a, der sich zu beiden Seiten eines vertikalen Schaftes 1b erstreckt. Der Schaft 1b kann hohl ausgebildet sein und zur Aufnahme von z. B. einer Befestigungsschraube dienen.

Die Halterung umfaßt weiterhin einen vom Halteteil 1 getragenen Clip 2, der zur Aufnahme und Lagerung der Rohrleitungen dient. Diese Aufnahme kann zur Erhöhung der akustischen Entkopplung auch über elastische Elemente (Gummischlauch usw.) erfolgen, wodurch eine akustische Zweifachentkopplung realisiert werden kann. Damit ein hinreichend großer Toleranzausgleich und auch eine gute akustische Entkopplung der Rohrleitungen gewährleistet ist, ist der Clip 2 an dem Halteteil 1 über elastische Elemente 3 gelagert. Diese elastischen Elemente 3 können aus Federn, Gummielementen, Elastomerelementen o. dgl. bestehen.

Der Clip 2 selbst besteht aus einem Unterteil 2a und einem Oberteil 2b. Das Unterteil 2a wiederum besteht aus einem im wesentlichen ebenen rechteckigen Mittelteil 2aa, welches mit einer mittigen Öffnung versehen ist, die den Schaft 1 b des Halteteils 1 mit Spiel umgibt. An zwei gegenüberliegenden Rändern des Mittelteils 2aa sind teilkreisförmige Aufnahmen 2ab vorgesehen, welche zur Aufnahme der Rohrleitungen dienen.

Ähnlich wie das Unterteil 2a ist auch das Oberteil 2b ausgebildet. Es besteht ebenfalls aus einem im wesentlichen ebenen rechteckigen Mittelteil 2ba, welches wie das Mittelteil 2aa mit einer mittigen Öffnung versehen ist, die den Schaft 1 b des Halteteils 1 mit Spiel umgibt, und aus zwei an gegenüberliegenden Rändern des Mittelteils 2ba vorgesehenen teilkreisförmigen Aufnahmen 2bb. Die Aufnahmen 2ab des Unterteils 2a und die Aufnahmen 2bb des Oberteils 2b ergänzen sich gegenseitig kreisförmig, so daß eine lagesichere Befestigung der Rohrleitungen an dem Clip 2 gewährleistet ist. Dadurch ist eine beliebige Einbaulage der Halterung 1 in stehender, liegender oder seitlicher Position möglich, ohne daß die Rohrleitungen aus den Aufnahmen 2ab und 2bb herausfallen können.

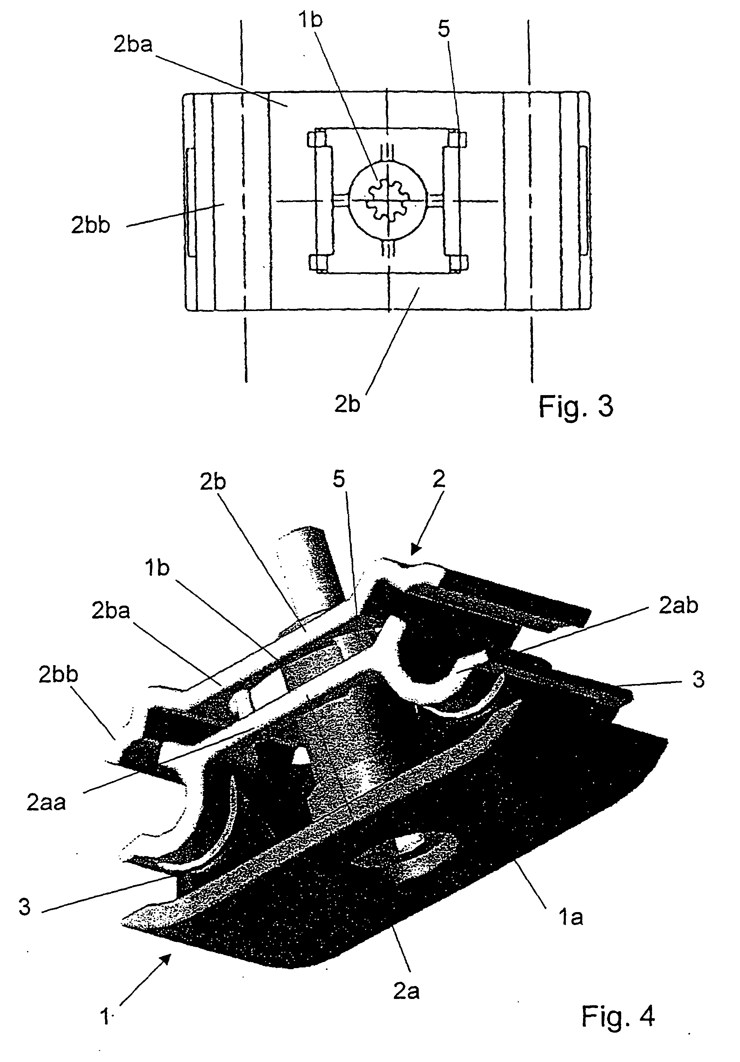

Das Unterteil 2a und das Oberteil 2b sind über Sollbruchstellen 4 miteinander so verbunden, daß im Anlieferzustand ein Abstand zwischen dem Unterteil 2a und dem Oberteil 2b vorhanden ist. Außerdem sind Rastelemente 5 vorgesehen, mit denen im fertig montierten Zustand das Unterteil 2a und das Oberteil 2b des Clips 2 zusammengehalten werden. Die Rastelemente 5 können aus hakenförmigen Rastnasen bestehen, die z. B. an dem Oberteil 2b des Clips 2 vorgesehen sind und in Richtung auf das Unterteil 2a vorstehen. Bei dieser Ausgestaltung können weiterhin die Sollbruchstellen 4 an den Spitzen der Rastnasen vorgesehen sein, wie aus Fig. 1 erkennbar ist. Durch diese Ausführungsform können die Rastelemente 5 und die Sollbruchstellen 4 in sinnvoller Weise und auf engstem Raum kombiniert werden. Die Rastelemente 5 dienen nicht nur zur Verrastung von Unterteil 2a und Oberteil 2b, sondern sind auch so angeordnet, daß sie gleichzeitig eine formschlüssige Verbindung herstellen, die nur ein Zusammenfügen in einer einzigen Stellung der beiden Teile zueinander zuläßt, wie sich aus der Schnittansicht nach Fig. 3 ergibt.

Die teilkreisförmigen Aufnahmen 2ab des Unterteils 2a sind so angeordnet, daß sie über die elastischen Elemente 3 an dem Querträger 1a des Halteteils 1 im Bereich von dessen freien Enden abgestützt sind, so daß eine direkte Kraftweiterleitung von den Rohrleitungen über die elastischen Elemente 3 in das Halteteil 1 erfolgen kann.

Die erfindungsgemäße Halterung wird in dem in Fig. 1 gezeigten Zustand angeliefert und ist in diesem Zustand zur Aufnahme der Rohrleitungen bereit. Die Rohrleitungen werden in die teilkreisförmigen Aufnahmen 2ab des Unterteils 2a eingelegt. Dann wird das Oberteil 2b des Clips 2 in Richtung auf das Unterteil 2a verschoben. Dabei werden die Sollbruchstellen 4, mit denen das Oberteil 2a und das Unterteil 2b des Clips 2 im Anlieferzustand verbunden sind und die an den Rastelementen 5 vorgesehen sein können, zerbrochen. Am Ende des Verschiebeweges greifen die an den beiden Teilen des Clips 2 angebrachten Rastelemente 5 ineinander und halten so das Unterteil 2a und das Oberteil 2b des Clips 2 fest zusammen. In diesem Zustand sind die Rohrleitungen sicher zwischen den teilkreisförmigen Aufnahmen 2ab des Unterteils 2a und den teilkreisförmigen Aufnahmen 2bb des Oberteils 2b gehalten. Dieser fertig montierte Zustand ist in Fig. 2 gezeigt.

Infolge der Lagerung der teilkreisförmigen Aufnahmen 2ab und 2bb auf den elastischen Elementen 3 sind die Rohrleitungen zusammen mit dem Clip 2 in allen drei Raumrichtungen x, y und z frei beweglich, so daß nicht nur ein guter Toleranzausgleich, sondern auch eine gute akustische Entkopplung gewährleistet ist. Selbst eine verspannte Einbaulage der Halterung bleibt infolge der erfindungsgemäßen Ausgestaltung ohne Einfluß auf die Isolationseigenschaften. Dazu trägt auch bei, daß die Mittelteile 2aa und 2ba des Clips 2 den Schaft 1b mit Spiel umgeben, so daß der Schaft 1b keine Behinderung der Bewegungsfreiheit des Clips 2 darstellt.

Die vorhergehende Beschreibung der Ausführungsbeispiele gemäß der vorliegenden Erfindung dient nur zu illustrativen Zwecken und nicht zum Zwecke der Beschränkung der Erfindung.

## Patentansprüche

1. Halterung zur Aufnahme von Rohrleitungen, insbesondere für Hydrauliksysteme, mit einem Schaft (1 b), der von einem Halteteil (1) absteht, das mit einem Wandbereich zu verbinden ist und über ein elastisches Element (3) einen Clip (2) trägt, der zwischen einem mit dem elastischen Element (3) verbundenen Unterteil (2a) und einem mit dem Unterteil (2a) lösbar verbindbaren Oberteil (2b) im Gebrauch die Rohrleitung aufnimmt, und das Unterteil (2a) des Clip (2) mit einer Öffnung versehen ist, die den Schaft (1b) mit einem radialen Spiel umgibt, **dadurch gekennzeichnet, dass** das Oberteil (2b) des Clip (2) mit einer Öffnung versehen ist, die den Schaft (1b) mit einem radialen Spiel umgibt.

2. Halterung nach Anspruch 1, **dadurch gekennzeichnet, dass** die elastischen Elemente (3) aus Federn, Gummielementen oder Elastomerelementen bestehen.

3. Halterung nach Anspruch 1 oder 2, wobei das Halteteil (1) in der Seitenansicht T-förmig mit einem horizontalen Querträger (1a) und dem vertikalen Schaft (1b) ausgebildet ist und wobei an beiden Enden des Querträgers (1a) je eines der elastischen Elemente (3) angeordnet ist.

4. Halterung nach einem der Ansprüche 1 bis 3, wobei das Oberteil (2b) und das Unterteil (2a) vorzugsweise über mindestens eine Sollbruchstelle (4) miteinander verbunden sind.

5. Halterung nach einem der Ansprüche 1 bis 4, wobei das Oberteil (2b) und das Unterteil (2a) miteinander korrespondierende Rastelemente (5) zur formschlüssigen Verbindung untereinander aufweisen.

6. Halterung nach einem der Ansprüche 1 bis 5, wobei das Oberteil (2b) im Anlieferzustand vom Unterteil (2a) beabstandet ist und im fertig montierten Zustand an diesem anliegt.

7. Halterung nach einem der Ansprüche 1 bis 6, wobei das Unterteil (2a) aus einem im wesentlichen flächigen, den vertikalen Schaft (1b) umgebenden Mittelteil (2aa) und aus zwei an gegenüberliegenden Seitenrändern des Mittelteils (2aa) vorgesehenen teilkreisförmigen Aufnahmen (2ab) für die Rohrleitungen besteht und wobei die teilkreisförmigen Aufnahmen (2ab) auf den elastischen Elementen (3) gelagert sind.

8. Halterung nach Anspruch 7, wobei das Oberteil (2b) aus einem im wesentlichen flächigen, den vertikalen Schaft (1b) umgebenden Mittelteil (2ba) und aus zwei teilkreisförmigen Aufnahmen (2bb) besteht und wobei sich die teilkreisförmigen Aufnahmen (2bb) des Oberteils (2b) und die teilkreisförmigen Aufnahmen (2ab) des Unterteils (2a) kreisförmig ergänzen.

## Claims

1. A holder for receiving pipes, especially for hydraulic systems, comprising a shank (1b) projecting from a retaining part (1) which is to be connected to a wall region and, via a resilient element (3), bears a clip (2) which during operation receives the pipe between a bottom part (2a) connected to the resilient element (3) and a top part (2b) releasably connected to the bottom part (2a), and the bottom part (2a) of the clip (2) has an opening which surrounds the shank (1b) with radial clearance, **characterised in that** the top part (2b) of the clip (2) has an opening which surrounds the shank (1b) with radial clearance.

2. A holder according to claim 1, **characterised in that** the resilient elements (3) comprise springs, rubber components or elastomer components.

3. A holder according to claim 1 or 2, wherein the retaining part (1) is T-shaped in side view and is formed with a horizontal transverse bearer (1a) and the vertical shank (1b), and wherein one of the resilient elements (3) is disposed at each end of the transverse bearer (1a).

4. A holder according to any of claims 1 to 3, wherein preferably the top part (2b) and the bottom part (2a) are connected to one another via at least one set breaking place (4).

5. A holder according to any of claims 1 to 4, wherein the top part (2b) and the bottom part (2a) have corresponding catch elements (5) for positively connecting to one another.

6. A holder according to any of claims 1 to 5, wherein the top part (2b) is spaced apart from the bottom part (2a) when delivered and abuts it when fully assembled.

7. A holder according to any of claims 1 to 6, wherein the bottom part (2a) comprises a substantially flat middle part (2aa) surrounding the vertical shank (1b) and two part-circular pipe receivers (2ab) on opposite side edges of the middle part (2aa) and wherein the part-circular receivers (2ab) are mounted on the resilient elements (3).

8. A holder according to claim 7, wherein the top part (2b) comprises a substantially flat middle part (2ba) surrounding the vertical shank (1b) and two part-circular receivers (2bb) and wherein the part-circular receivers (2bb) on the top part (2b) and the part-circular receivers (2ab) on the bottom part (2a) are circular in combination.

## Revendications

1. Support pour recevoir des conduites tubulaires, notamment pour des systèmes hydrauliques, comprenant une tige (1b) faisant saillie d'un élément de maintien (1) qui est à relier à une zone de paroi et porte par l'intermédiaire d'un élément élastique (3) un clip (2) qui, lorsqu'il est utilisé, reçoit une tuyauterie entre une partie inférieure (2a) reliée à l'élément élastique (3) et une partie supérieure (2b) pouvant être reliée de façon amovible à la partie inférieure (2a), la partie inférieure (2a) du clip (2) étant munie d'une ouverture qui entoure la tige (1b) avec un jeu radial,
**caractérisé en ce que**
la partie supérieure (2b) du clip (2) est munie d'une ouverture qui entoure la tige (1b) avec un jeu radial.

2. Support selon la revendication 1,
**caractérisé en ce que**
les éléments élastiques (3) sont des ressorts, des éléments en caoutchouc ou des éléments en élastomère.

3. Support selon la revendication 1 ou 2,
**caractérisé en ce que**
l'élément de maintien (1) vu de côté a la forme d'un T avec une traverse (1a) horizontale et la tige verticale (1b), et l'un des éléments élastiques (3) est respectivement disposé aux deux extrémités de la traverse (1a).

4. Support selon l'une quelconque des revendications 1 à 3,
**caractérisé en ce que**
la partie supérieure (2b) et la partie inférieure (2a) sont de préférence reliées l'une à l'autre par au moins un point destiné à la rupture (4).

5. Support selon l'une quelconque des revendications 1 à 4,
**caractérisé en ce que**
la partie supérieure (2b) et la partie inférieure (2a) présentent des éléments d'encliquetage (5) correspondants pour s'assembler par complémentarité de formes.

6. Support selon l'une quelconque des revendications 1 à 5,
**caractérisé en ce que**
lors de la livraison, la partie supérieure (2b) est écartée de la partie inférieure (2a) et, une fois montée, s'applique contre celle-ci.

7. Support selon l'une quelconque des revendications 1 à 6,
**caractérisé en ce que**
la partie inférieure (2a) comprend une partie centrale (2aa) pour l'essentiel plane entourant la tige verticale (1b) ainsi que deux logements (2ab) en forme de cercle partiel prévus sur des bords latéraux de la partie centrale (2aa) situés l'un en face de l'autre pour les tuyauteries, et les logements (2ab) en forme de cercle partiel sont disposés sur les éléments élastiques (3).

8. Support selon la revendication 7,
**caractérisé en ce que**
la partie supérieure (2b) comprend une partie centrale (2ba) pour l'essentiel plane entourant la tige verticale (1b) ainsi que deux logements (2bb) en forme de cercle partiel, et les logements (2bb) en forme de cercle partiel de la partie supérieure (2b) et les logements (2ab) en forme de cercle partiel de la partie inférieure (2a) se complètent pour former un cercle.
